# EUROPÄISCHE PATENTANMELDUNG

(11) **EP 2 543 913 A1**
(43) Veröffentlichungstag der Anmeldung: **09.01.2013**
(21) Anmeldenummer: 12003738.7
(22) Anmeldetag: 10.05.2012
(51) Int. Cl.: F16J 15/34

(54) **Gleitringdichtungsanordnung mit Dichtelement**

(30) Priorität: 07.07.2011 DE 102011107394
(71) Anmelder: Carl Freudenberg KG, 69469 Weinheim (DE)
(72) Erfinder: Lederer, Andreas, 80637 München (DE); Feigl, Peter, 82335 Höhenrain (DE); Simon, Clemens, 82362 Wilheim (DE)

(57) **Zusammenfassung**

Eine Gleitringdichtungsanordnung, umfassend ein Gehäuse (1), einen Gleitring (2) und einen Gegenring (3), wobei der Gleitring (2) und der Gegenring (3) jeweils aneinander liegende Dichtflächen (2a, 3a) aufweisen, wobei die Dichtfläche (2a) des Gleitringes (2) der Dichtfläche (3a) des Gegenrings (3) gegenüberliegt und wobei der Gleitring (2) durch ein Federelement (4), welches sich gegen das Gehäuse (1) abstützt, gegen den Gegenring (3) verpresst ist, ist im Hinblick auf die Aufgabe, eine Gleitringdichtungsanordnung der eingangs genannten Art derart auszugestalten und weiterzubilden, dass Komponenten mit möglichst einfacher Geometrie verwendet werden können, wobei die Gleitringdichtungsanordnung nach problemloser Montage auch bei mechanischer Beanspruchung eine dauerhaft hohe Dichtheit und lange Lebensdauer zeigt, dadurch gekennzeichnet, dass der Gleitring (2) mit einem elastischen Dichtelement (5) verbunden ist, welches zwischen dem Gehäuse (1) und dem Gleitring (2) positioniert ist.

## Beschreibung

### Technisches Gebiet

Die Erfindung betrifft eine Gleitringdichtungsanardnung gemäß dem Oberbegriff des Patentanspruchs 1.

### Stand der Technik

Gleitringdichtungsanordnungen der eingangs genannten Art sind aus dem Stand der Technik bereits bekannnt. Dabei kann eine erste Dichtfläche als Gleitwerkstoff Siliziumcarbid mit Graphitfüllung aufweisen und eine zweite Dichtfläche als Gleitwerkstoff poröses Siliziumcarbid aufweisen.

Bei den genannten Gleitringdichtungsanordnungen des Stands der Technik ist nachteilig, dass die Dichtflächen häufig aus spröden, relativ harten Materialien oder Werkstoffen gefertigt sind. Diese können bei mechanischer Beanspruchung beschädigt werden und Risse aufweisen. Sobald eine Dichtfläche mit einem Riss versehen ist, ist eine zuverlässige Abdichtung nicht mehr möglich.

Des Weiteren ist nachteilig, dass die relativ harten und spröden Dichtflächen sowohl im Hinblick auf ihre Geometrien als auch auf den Anpressdruck exakt auf einander abgestimmt werden müssen, um eine zuverlässige Dichtheit zu erzielen. Hiermit geht ein hoher Montageaufwand einher.

Ferner sind die aufwändigen Geometrien in den verwendeten harten Werkstoffen nur schwer herstellbar. Hiermit gehen hohe Kosten einher.

### Darstellung der Erfindung

Der Erfindung liegt daher die Aufgabe zugrunde, eine Gleitringdichtungsanordnung der eingangs genannten Art derart auszugestalten und weiterzubilden, dass Komponenten mit möglichst einfacher Geometrie verwendet werden können, wobei die Gleitringdichtungsanordnung nach problemloser Montage auch bei mechanischer Beanspruchung eine dauerhaft hohe Dichtheit und lange Lebensdauer zeigt.

Die vorliegende Erfindung löst die zuvor genannte Aufgabe durch die Merkmale des Patentanspruchs 1.

Danach ist die eingangs genannte Gleitringdichtungsanordnung dadurch gekennzeichnet, dass der Gleitring mit einem elastischen Dichtelement verbunden ist, welches zwischen dem Gehäuse und dem Gleitring positioniert ist.

Erfindungsgemäß ist zunächst erkannt worden, dass ein elastisches Dichtelement eine schwingungsdämpfende Funktion entfalten kann. Hierdurch werden mechanische Stöße, die auf den Gleitring oder den Gegenring wirken, vorteilhaft abgefedert. Darauf ist erkannt worden, dass die Betriebsfähigkeit, nämlich die Dichtheit, einer Gleitringdichtungsanordnung durch ein elastisches Dichtelement aufrecht erhalten werden kann, auch wenn im Gleitring Risse entstanden sind. Hierbei ist konkret erkannt worden, dass das elastische Dichtelement auf Grund seiner Elastizität eine weitaus höhere mechanische Belastungsgrenze zeigt als der Gleitring. Insbesondere können das Gehäuse und das elastische Dichtelement einen mechanischen Schutz gegen Brüche ausbilden, die aufgrund der Sprödigkeit bspw. einer Keramik auftreten können. Vorteilhaft kann hierdurch eine eventuell verwendete Keramik sehr dünn ausgeführt werden. Es ist auch erkannt worden, dass ein Axialversatz zwischen Gleitring und Gehäuse beziehungsweise zwischen Gleitring und Gegenring durch das elastische Dichtelement geringfügig ausgeglichen werden kann. Insbesondere ist das elastische Dichtelement als einstückige Gleitringhalterung und Abdichtung ausgebildet, die sowohl am Gehäuse als auch am Gleitring anliegt. Insoweit ist eine Gleitringdichtungsanordnung angegeben welche nach problemloser Montage eine hohe Lebensdauer bei hoher Dichtheit zeigt.

Folglich ist die eingangs genannte Aufgabe gelöst.

Der Gleitring könnte in dem Dichtelement teilweise gekammert aufgenommen sein. Durch die Kammerung des Gleitrings führt ein Riss in diesem nicht zum Ausfall der Dichtung. Eine Kammerung empfiehlt sich insbesondere bei Gleitringen aus keramischen oder vergleichbaren Werkstoffen.

Der Gleitring könnte in axialer Richtung von dem Dichtelement umgeben sein. Durch diese konkrete Ausgestaltung wird der Gleitring in axialer Richtung stabilisiert.

Vor diesem Hintergrund ist denkbar, dass der Gleitring in radialer Richtung von dem Dichtelement überlappt ist. Durch diese konkrete Ausgestaltung wird eine stabile Kammerung des Gleitrings realisiert.

Der Gleitring könnte in axialer Richtung von einem Schutzflansch umgeben sein. Der Schutzflansch könnte als Blechgehäuse ausgestaltet sein. Hierdurch wird die Gleitfläche, nämlich die gedachte Fläche zwischen den Dichtflächen vor Beschädigungen geschützt. Durch diese konkrete Ausgestaltung kann der Schutzflansch sogar teilweise den Gegenring überragen und auch diesen vor Schäden schützen. Des Weiteren kann der Schutzflansch als Anlagefläche für das Federelement dienen, welches den Gleitring gegen den Gegenring presst.

Der Gleitring könnte in radialer Richtung von einem Schutzflansch überlappt sein. Durch diese konkrete Ausgestaltung kann der Schutzflansch als Widerlager für das Federelement dienen. Durch diese konkrete Ausgestaltung kann der Schutzflansch als Anlagefläche für das Federelement dienen, welches den Gleitring gegen den Gegenring presst.

Der Gleitring und der Gegenring könnten scheibenförmig ausgebildet sein. Hierdurch weisen der Gleitring und der Gegenring eine sehr einfach zu fertigende Geometrie auf. Die Gleitringdichtungsanordnung ist daher kostengünstig herstellbar.

Vor diesem Hintergrund könnten der Gleitring und/ oder der Gegenring aus einem Keramik oder Kohle aufweisenden Werkstoff gefertigt sein.

Die hier beschriebene Gleitringdichtungsanordnung zeichnet sich durch ein sehr geringes Gewicht aus und kann auf Grund ihrer günstigen Eigenfrequenzen auch bei sehr hohen Drehzahlen eingesetzt werden. Durch die zuvor beschriebene Kammerung des Dichtelements kann eine definierte Verformung von weniger als 1,5 µm der Dichtfläche bewirkt werden. Dabei kann die Dichtfläche ballig oder hohl ausgeprägt werden. Dies ist insbesondere bei Gleitringdichtungsanordnungen vorteilhaft, da eine Spaltgeometrie dadurch positiv verändert werden kann. Insoweit ist eine Steuerung des "Tuningdurchmessers" am Dichtelement möglich.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachgfolgende Erläuterung bevorzugter Ausführungsbeispiele der erfindungsgemäßen Gleitringdichtungsanordnung an Hand der Zeichnung zu verweisen.

In Verbindung mit der Erläuterung der bevorzugten Ausführungsbeispiele an Hand der Zeichnung werden im Allgemeinen bevorzugte Ausgestaltungen und Weiterbildungen der Lehre erläutert.

### Kurzbeschrefbung der Zeichnung

In der Zeichnung zeigen
- Fig. 1: eine Gleitringdichtungsanordnung, bei welcher der Gleitring in axialer Richtung und radialer Richtung sowohl von einem elastischen Dichtelement als auch von einem Schutzflansch umgriffen ist,
- Fig. 2: eine Gleitringdichtungsanordnung, bei welcher zwischen dem Gehäuse und dem Gleitring ein elastisches Dichtelement angeordnet ist,
- Fig. 3: eine Gleitringdichtungsanordnung bei welcher zwischen dem Gehäuse und dem Gleitring eine Dichtelement aufgenommen ist, wobei der Gleitring in axialer Richtung von einem Schutzflansch umgeben ist, und
- Fig. 4: eine Gleitringdichtungsanordnung, bei welcher das Federelement unmittelbar auf den Gleitring wirkt, wobei der Gleitring von einem elastischen Dichtelement und einem Schutzflansch umgeben ist.

### Ausführung der Erfindung

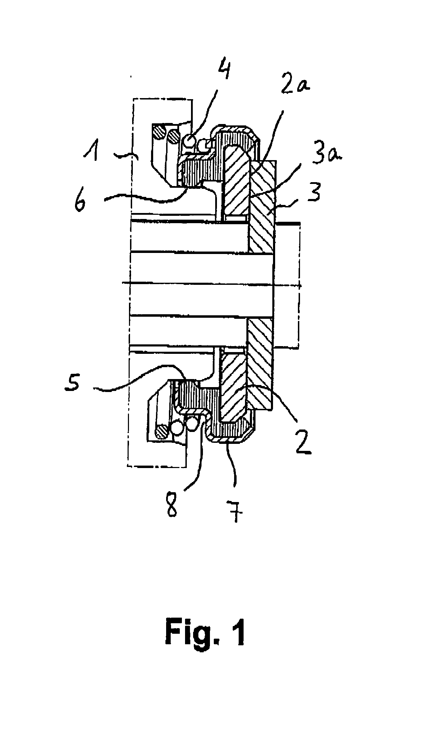

Fig. 1 zeigt eine Gleitringdichtunsanordnung umfassend ein Gehäuse 1, einen Gleitring 2 und einen Gegenring 3 wobei der Gleitring 2 und der Gegenring 3 jeweils aneinander liegende Dichtflächen 2a, 3a aufweisen, wobei die Dichtfläche 2a des Gleitrings 2 der Dichtfläche 3a des Gegenrings 3 gegenüberliegt und wobei der Gleitring 2 durch ein Federelement 4, welches sich gegen das Gehäuse 1 abstützt, gegen den Gegenring 2 verpresst ist.

Der Gleitring 2 ist mit einem elastischen Dichtelement 5 verbunden, welches zwischen dem Gehäuse 1 und dem Gleitring 2 positioniert ist.

Das elastische Dichtelement 5 liegt an einer umfänglichen Abdichtfläche 6 des Gehäuses an.

Der Gleitring 2 ist in dem Dichtelement 5 teilweise gekammert aufgenommen, wobei ein Teil seiner radial äußeren Umfangsfläche von dem Dichtelement 5 umgeben ist und wobei das Dichtelement 5 an diesem Teil der Umfangsfläche anliegt.

Der Gleitring 2 ist dabei in axialer Richtung von dem Dichtelement 5 umgeben. Der radial äußere Teil des Gleitrings 2 ist in radialer Richtung beidseitig von dem elastischen Dichtelement 5 überlappt.

Der Gleitring 2 ist des Weiteren in axialer Richtung von einem Schutzflansch 7 umgeben. Der Gleitring 2 ist dabei in radialer Richtung von dem Schutzflansch 7 überlappt. Der Schutzflansch 7 bildet des Weiteren eine Stufe 8 aus, gegen welche sich das Federelement 4 abstützt. Das Federelement 4 ist als kegelstumpfförmige Kontaktfeder ausgestaltet.

Der Gleitring 2 und der Gegenring 3 sind scheibenförmig ausgebildet.

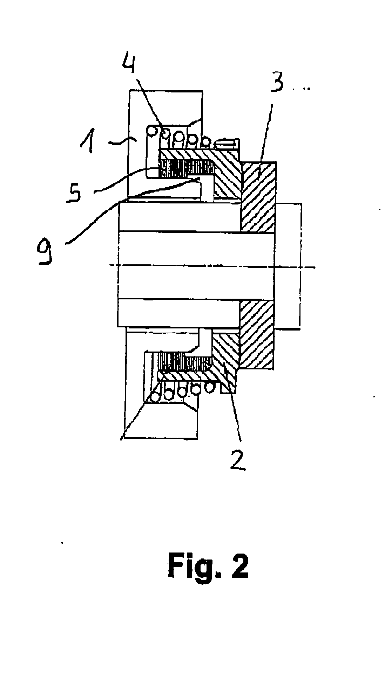

Fig. 2 zeigt eine Gleitringdichtungsanordnung, bei welcher ein elastisches Dichtelement 5 in einem Axialspalt 9 zwischen dem Gehäuse 1 und dem Gleitring 2 aufgenommen ist. Das elastische Dichtelement 5 ist an den Gleitring 2 oder an das Gehäuse 1 angespritzt.

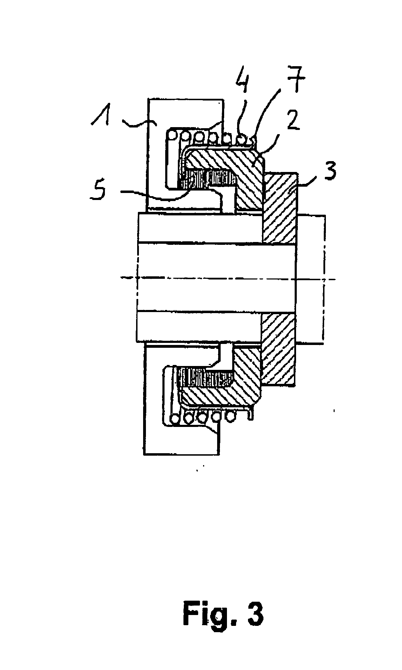

Fig. 3 zeigt eine Gleitringdichtungsanordnung, bei welcher zwischen dem Gleitring 2 und dem Gehäuse 1 ein elastisches Dichtelement 5 aufgenommen ist.

In radialer Richtung schließt sich an das elastische Dichtelement 5 zunächst der Gleitring 2, dann der Schutzflansch 7 und dann das Federelement 4 an. Das Dichtelement 5, der Gleitring 2, der Schutzflansch 7 und das Federelement 4 sind dabei koaxial angeordnet.

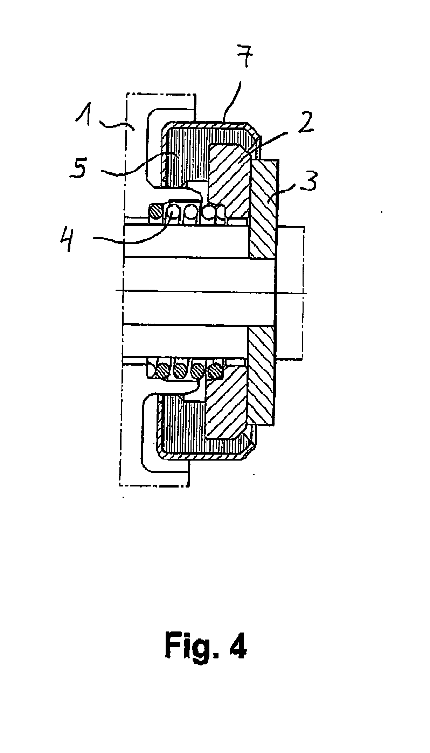

Fig. 4 zeigt eine Gleitringdichtungsanordnung, bei welcher das Federelement 4 unmittelbar am Gleitring 2 anliegt. Dabei ist der Gleitring 2 in radialer und axialer Richtung von einem elastischen Dichtelement 5 und einem Schutzftansch 7 umgeben.

Der Gleitring 2 und der Gegenring 3 sind scheibenförmig ausgebildet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Gleitringdichtungsanordnung, umfassend ein Gehäuse (1), einen Gleitring (2) und einen Gegenring (3), wobei der Gleitring (2) und der Gegenring (3) jeweils aneinander liegende Dichtflächen (2a, 3a) aufweisen, wobei die Dichtfläche (2a) des Gleitrings (2) der Dichtfläche (3a) des Gegenrings (3) gegenüberliegt und wobei der Gleitring (2) durch ein Federelement (4), welches sich gegen das Gehäuse (1) abstützt, gegen den Gegenring (3) verpresst ist,
**dadurch gekennzeichnet; dass** der Gleitring (2) mit einem elastischen Dichtelement (5) verbunden ist, welches zwischen dem Gehäuse (1) und dem Gleitring (2) positioniert ist.

2. Gleitringdichtungsanordnung nach Anspruch 1, **dadurch gekennzeichnet, dass** der Gleitring (2) In dem Dichtelement (5) teilweise gekammert aufgenommen ist.

3. Gleitringdichtungsanordnung nach Anspruch 1 oder 2, **dadurch gekennzeichnet, dass** der Gleitring (2) in axialer Richtung von dem Dichtelement (5) umgeben ist.

4. Gleitringdichtungsanordnung nach einem der Ansprüche 1 bis 3,
**dadurch gekennzeichnet, dass** der Gleitring (2) In radialer Richtung von dem Dichtelement (5) überlappt ist.

5. Gleitringdichtungsanordnung nach einem der Ansprüche 1 bis 4,
**dadurch gekennzeichnet, dass** der Gleitring (2) in axialer Richtung von einem Schutzflansch (7) umgeben ist.

6. Gleitringdichtungsanordnung nach einem der Ansprüche 1 bis 5, **dadurch gekennzeichnet, dass** der Gleitring (2) in radialer Richtung von einem Schutzflansch (7) überlappt ist.

7. Gleitringdichtungsanordnung nach einem der Ansprüche 1 bis 6, **dadurch gekennzeichnet, dass** der Gleitring (2) und der Gegenring (3) scheibenförmig ausgebildet sind.
